Europäisches Patentamt

European Patent Office

Office européen des brevets

(11) Publication number: **0 278 030 B1**

(12) **EUROPEAN PATENT SPECIFICATION**

(45) Date of publication of patent specification: **23.09.92**

(51) Int. Cl.5: **B23K 35/02**, B23K 35/30, B23K 35/32

(21) Application number: **87101827.1**

(22) Date of filing: **10.02.87**

(54) Insert for liquid phase diffusion bonding.

(43) Date of publication of application:
**17.08.88 Bulletin 88/33**

(45) Publication of the grant of the patent:
**23.09.92 Bulletin 92/39**

(84) Designated Contracting States:
**DE FR GB**

(56) References cited:
EP-A- 0 038 584      FR-A- 2 147 512
US-A- 3 678 570      US-A- 3 859 144
US-A- 4 029 479      US-A- 4 034 906
US-A- 4 340 650

(73) Proprietor: **NIPPON KOKAN KABUSHIKI KAISHA**
**1-2 Marunouchi 1-chome Chiyoda-ku**
**Tokyo 100(JP)**

(72) Inventor: **Ueno, Yasuhiro c/o Patent Division**
**NIPPON KOKAN KABUSHIKI KAISHA 1-2,**
**1-chome**
**Marunouchi Chiyoda-ku Tokyo(JP)**
Inventor: **Kagechika, Hiroshi c/o Patent Division**
**NIPPON KOKAN KABUSHIKI KAISHA 1-2,**

1-chome
Marunouchi Chiyoda-ku Tokyo(JP)
Inventor: **Watanabe, Itaru c/o Patent Division**
**NIPPON KOKAN KABUSHIKI KAISAH 1-2,**
1-chome
Marunouchi Chiyoda-ku Tokyo(JP)
Inventor: **Kosuge, Shigeyoshi c/o Patent Division**
**NIPPON KOKAN KABUSHIKI KAISHA 1-2,**
1-chome
Marunouchi Chiyoda-ku Tokyo(JP)
Inventor: **Kojima, Toshifumi c/o Patent Division**
**NIPPON KOKAN KABUSHIKI KAISHA 1-2,**
1-chome
Marunouchi Chiyoda-ku Tokyo(JP)

(74) Representative: **Sajda, Wolf E., Dipl.-Phys. et al**
**MEISSNER, BOLTE & PARTNER Widenmayerstrasse 48 Postfach 86 06 24**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to an insert to be interposed between first and second base metals, each made of a metal or an alloy, for joining the first and second base metals by liquid phase diffusion bonding, comprising a thin substrate made of a metal or an alloy, and one or two bonding alloy layers formed by plating on one or the two major surfaces on the substrate, respectively, and having a melting point lower than that of the first and second base metals. The invention further relates to a method of liquid phase diffusion bonding of first and second base metals using such an insert.

In order to join base metals such as high-alloy materials which are difficult to apply fusion-weld techniques, or in order to join base metals which have large joining interfaces, the method called "diffusion bonding" is employed. This method consists in first holding two base metals to be bonded together by proper means and then heating them in vacuum or an inert-gas atmosphere, thereby diffusing metal atoms from one base metal into the other, or from an insert into one or both base metals, and thus bonding the base metals together without melting the base metals. Various methods of diffusion bondings are known, they are classified into three types, direct diffusion bonding, solid phase diffusion bonding, and liquid phase diffusion bonding.

In direct diffusion bonding, two base metals are held in face-to-face contact. In solid phase diffusion bonding, an insert is interposed between two base metals and metal atoms diffuse from the insert into the base metals without melting the insert. In liquid phase diffusion bonding, an insert is interposed between two base metals and is melted, whereby metal atoms diffuse from the insert into the base metals. Liquid phase diffusion bonding is advantageous over the other two diffusion bonding methods in that a lower pressure is required to hold the base metals and/or the insert together.

The insert used in the liquid phase diffusion bonding is made of a metal or an alloy having a melting point lower than that of the base metal. The assembly consisting of the base metals and the insert interposed between the base metals is heated in vacuum or an inert-gas atmosphere to the melting point of the insert or a higher temperature, thereby melting the insert. As the insert melts, the metal atoms diffuse from the insert into the base metals, whereby the base metals are bonded. (See US-A-3,678,570 to Paulonis et al.) It is desirable that the insert be thin enough, 5 to 200 $\mu$m, to allow the metal atoms to diffuse easily into the base metals. Two types of such thin inserts are available. The first type is a film made of powder of insert material or a foil of insert material. The second is an insert made of one or two layers of insert material formed on the joining surfaces of the base metals, respectively, either by plating or by spraying.

When the insert used in the liquid phase diffusion bonding is a film made of powder of insert material or consists of one or two layers of insert material formed on the base metals by spraying, respectively, an oxide is likely to be formed on the joining surfaces of the base metals. Further, since it is difficult to make such an insert having a uniform thickness, some portions of the insert will remain on the joining surfaces of the base metals after the base metals have been heated. For these reasons, the bonding strength attained is insufficient. On the other hand, the insert, which consists of one or two layers of insert material plated on the base metals, can have a uniform thickness if the base metals have simple shapes If these base metals are large, or have complicated shapes, the insert can hardly have a uniform thickness.

On the other hand, it is relatively easy to form a foil of insert material, having a uniform thickness. This foil can therefore provide an insert layer having a uniform thickness for large joining surfaces. The foil can be made either by rolling or by rapid solidification process. One of the alloys that can be rolled into a foil having 5 to 200 $\mu$m is A$\ell$-13% Si alloy. This alloy is usually used in component of a so-called brazing sheet. The brazing sheet is made first by sandwiching a thin aluminum plate between two thin plates of A$\ell$-13% Si alloy and then by rolling all these plates together. As is disclosed in Japanese Patent Disclosure No. 119683 (1981) KOKAI, the brazing sheet is interposed between a Ti plate and an A$\ell$ plate, or between two A$\ell$ plates, thus to join these plates by liquid phase diffusion bonding.

To fasten two base metals of Ni-based alloy by liquid phase diffusion bonding, an insert made of a Ni-based alloy containing P, B or Si which lowers the melting point of the Ni-based alloy, is after used. This alloy and the other low melting-point alloys forming inserts for liquid phase diffusion bonding can hardly be rolled into foils having a thickness of 5 to 200 $\mu$m. This is because all these alloys has a small workability and the foils made by hot-rolling these metals are apt to have cracks. Indeed rapid solidification process can provide thin foils made of these alloys and having a thickness of 5 to 200 $\mu$m, but cannot provide thin foils having a size of 1 m (length) x 0,5 m (width) or a wider size. Most of the low melting-point alloys, generally used as the materials of inserts for liquid phase diffusion bonding, are brittle. A thin foil made of any of these alloys and interposed between two base metals will be apt to be torn when the base metals slide against each other. In some cases, the thin foil can be torn while it is inserted into the gap between the base metals.

US-A-4 029 479 relates to a plated foil for liquid interface bonding of titanium wherein a honeycomb core for a honeycomb sandwich panel is provided with two facing sheets. For this purpose, further sheets of plated foil of titanium or a selected titanium alloy are interposed, respectively, between the facing sheets and the core. As explained in detail, the foil sheets have a foil thickness of the order of 0,001 inch corresponding to 25 $\mu$m wherein it is preferred that the thickness does not exceed 0,0006 inch corresponding to 15 $\mu$m.

So, an insert according to the preamble of claims 1 and 7 is known from US-A-4 029 479, wherein the metal or the alloy of the thin substrate consists of Ti or a Ti-based alloy.

FR-A-2 147 512 relates to a specific technical field, namely to a method of soldering base metals. In this document FR-A-2 147 512 it is intended to solder pieces having precise details wherein care is to be taken that the solder will not flow down from the respective surface during soldering. According to the specific purpose of the method in FR-A-2 147 512 a substrate of 3 $\mu$m is used which is provided with an outer alloy layer of 4 $\mu$m. The substrate is made of a material selected from the group consisting of an Fe-based alloy, an Ni-based alloy, a Cu-based alloy and an Mo-based alloy. Since this document is concerned with soldering, the aspect of bonding base metals by liquid phase diffusion bonding is not touched in this document.

Accordingly, the object underlying the present invention is to provide an insert which is capable of providing a reliable liquid phase diffusion bonding having a high shearing strength between two base metals even if the respective base metals have a large contacting area or a contacting surface with a complex or complicated shape.

A further object underlying the present invention is to provide a method of liquid phase diffusion bonding of two or first and second base metals using an insert, in order to provide a reliable liquid phase diffusion bonding having a high shearing strength between the two or the first and second base metals even if the respective base metals have a large contacting area or a contacting surface with a complex or complicated shape.

According to one aspect of the present invention, the insert according to the preamble of claim 1 is characterized in that the thin substrate has a thickness in the range of 50 to 500 $\mu$m and is made of a material selected from the group consisting of Fe, Ni, Cu, Ti, an Fe-based alloy, an Ni-based alloy, a Cu-based alloy and a Ti-based alloy; and in that the two bonding alloy layers have a thickness in the range of 5 to 20 $\mu$m.

According to another aspect of the present invention, the insert according to the preamble of claim 7 is characterized in that the thin substrate has a thickness in the range of 50 to 500 $\mu$m and is made of the same material as the first base metal or a material containing an element which is the main component of the first base metal, the material being selected from the group consisting of Fe, Ni, Cu, Ti, an Fe-based alloy, an Ni-based alloy, a Cu-based alloy and a Ti-based alloy; and in that the bonding alloy layer has a thickness in the range of 5 to 20 $\mu$m.

According to specific embodiments of the inserts according to the invention, the substrate is made by rolling.

According to further developments of the inserts according to the invention, the plating of the respective bonding alloy layer includes electroplating, vacuum plating, hot dipping, non-electrode plating, sputtering and ion plating.

According to a further development of the inserts according to the present invention, the respecitve bonding alloy layers are made of a material selected from the group consisting of an Ni-based alloy, a Cu-based alloy and a Ti-based alloy.

According to a further development of the inserts according to the present invention, the substrate has a melting point higher than that of the respective bonding alloy layers by 100 °C or more.

According to a further development of the inserts according to the present invention, the respective bonding alloy layers have a melting point lower than that of the first and second base metals by 200 °C or more.

According to a further aspect of the invention, the method of liquid phase diffusion bonding of two base metals using an insert comprises the following steps:

- forming bonding alloy layers having a melting point lower than that of the two base metals on both major surfaces of a thin substrate made of a material selected from the group consisting of Fe, Ni, Cu, Ti, an Fe-based alloy, an Ni-based alloy, a Cu-based alloy, and a Ti-based alloy, by plating the bonding alloy layers on the substrate to produce the insert;
- inserting the insert between the base metals; and
- heating the two base metals and the insert to a temperature not lower than the melting point of the bonding alloy layers and lower than the melting point of the two base metals and the substrate to diffuse the atoms of the substrate and the two base metals, thereby joining the two base metals, wherein a substrate is used having a thickness in the range of 50 to 500 $\mu$m and being

sufficiently thick in its material to remain after heating as a layer joining the two base metals, and

wherein bonding alloy layers are used having a thickness in the range of 5 to 20 $\mu$m.

According to a further aspect of the present invention, the method of liquid phase diffusion bonding of first and second base metals using an insert comprises the following steps:

- forming a bonding alloy layer of a material having a melting point lower than that of a substrate and the second base metal by plating the material of the bonding alloy layer on a major surface of a thin substrate made of the same material as the first base metal or a material containing an element which is the main component of the first base metal, the material of the substrate being selected from the group consisting of Fe, Ni, Cu, Ti, an Fe-based alloy, an Ni-based alloy, a Cu-based alloy, and a Ti-based alloy, the substrate and the bonding alloy layer constituting the insert, the material of the bonding alloy layer being selected to contain atoms diffusible by heat into the substrate and into the second base metal;
- inserting the insert between the first and second base metals so that the bonding alloy layer faces toward the second base metal; and
- heating the base metals and the insert to a temperature not lower than the melting point of the bonding alloy layer and lower than the melting point of the base metals and the substrate to diffuse atoms of the bonding alloy layer into the substrate and into the second base metal, and to diffuse the atoms of the substrate into the first base metal, thereby joining the first and second base metals,

wherein a substrate is used having a thickness in the range of 50 to 500 $\mu$m, and

wherein a bonding alloy layer is used having a thickness in the range of 5 to 20 $\mu$m.

According to the specific concept of the present invention, the bonding alloy layers can have a uniform thickness even if the bodies of the first and second base metals are large and/or have a complicated and uneven shape. It results that these bonding alloy layers can strongly and firmly join the base metals together. Since the substrate is made of a mechanically strong material, the insert is easy to manufacture and to handle. Further, since the bonding alloy layers are formed by plating, they can be extremely thin. Therefore, they can be heated to their melting point or a higher temperature in a short period of time.

The invention will be explained in more detail in the following description in conjunction with the accompanying drawings, in which:

Fig. 1 is a cross-sectional view of an insert according to the present invention;

Fig. 2 is a cross-sectional view of two base metals joined by the insert of Fig. 1 interposed between the two base metals;

Fig. 3 is a cross-sectional view of another insert according to the invention; and

Fig. 4 is a cross-sectional view of two base metals joined by the insert of Fig. 3 interposed between the base metals.

The embodiments of the present invention will now be described in detail, with reference to the accompanying drawings.

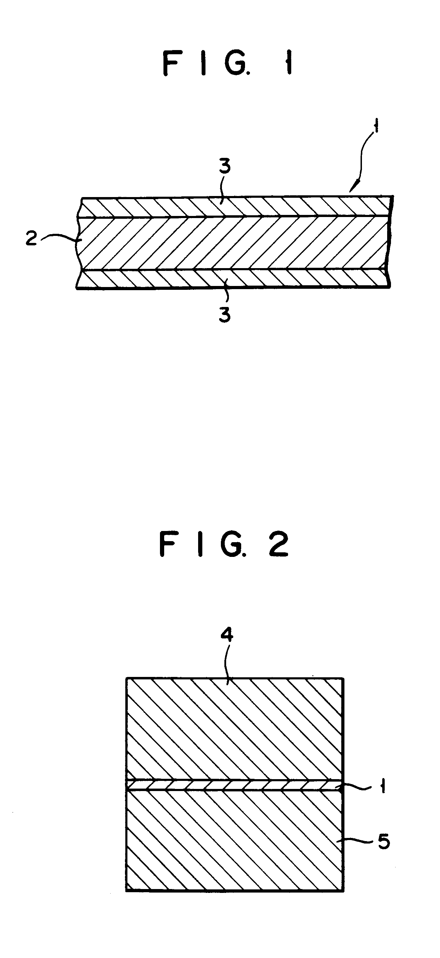

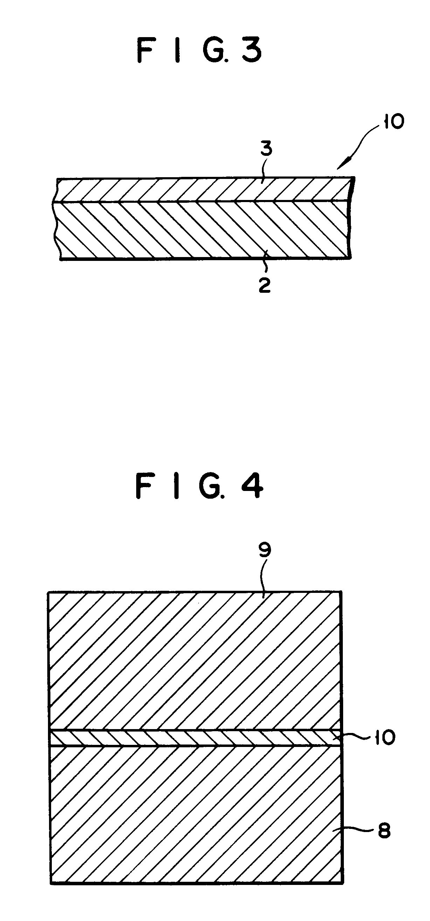

Fig. 1 is a cross-sectional view of an insert 1 according to a first embodiment of the invention. Fig. 2 shows two base metals 4 and 5 joined by the insert 1 interposed between them. As is shown in Fig. 1, the insert 1 comprises a thin substrate 2 made by cold-rolling, and two bonding alloy layers 3 formed by plating on the upper and lower surfaces of the substrate 2, respectively. Both layers 3 are extremely thin, and are made of an alloy having a melting point lower than that of the substrate 2. The insert 1 is used to achieve liquid phase diffusion bonding of the first and second base metals 4 and 5. More precisely, the insert 1 is interposed between the first base metal 4 and second base metal 5. Then, the insert 1 and the base metals 4 and 5 are clamped together with a pressure of, for example, 50 bar, and are placed in a atmosphere of a low pressure of about $1,3 \cdot 10^{-7}$ bar ($10^{-4}$ Torr) and heated to the melting point of the alloy layers 3 or to a temperature above this melting point but below the melting points of the substrate 2 and the base metals 4 and 5. Hence, neither the substrate 2 nor the base metals 4 and 5 melt or be deformed. As the heating proceeds, the atoms of the alloy layers 3 diffuse into the base metals 4 and 5. When the layers 3 cease to exist at all, the base metals 4 and 5 are firmly bonded by the substrate 2.

The base metals 4 and 5 can be made of a metal or an alloy. The substrate 2 is made of a material selected from the group consisting of Fe, Ni, Cu, Ti, a Fe-based alloy, a Ni-based alloy, a Cu-based alloy and a Ti-based alloy. Of these materials, the most workable, strongest after working, and most ductile is cold-rolled into a foil. Since the substrate 2 is made of such material, the bonding of the base metals 4 and 5 can be sufficiently strong even if the substrate 2 remains between the base metals 4 and 5. When the substrate 2 is as mechanically strong as, or mechanically stronger than, the base metals 4 and 5, the combined structure made up of the substrate 2 and the base metals 4 and 5 does not break at the substrate 2 when a tensile stress is applied on this structure. This also ensures a sufficiently firm bonding of the base metals. Further, when the substrate 2 is as strong as, or stronger than the base metals 4 and 5, the insert 1 can be strong enough to be interposed between the base metals 4 and 5 without being broken. There will arise no practical problem even if the bonding alloy layers 3 are not so strong mechanically.

It is desirable that the substrate 2 be 50 to 500 $\mu$m thick, for some reasons. First, it is difficult to manufacture a foil having a thickness less than 5 $\mu$m. Secondly, such a thin foil, even if obtained, is hard to handle. Thirdly, if the substrate 2 has a thickness over 500 $\mu$m, the insert 2 will be too thick to successfully accomplish liquid phase diffusion bonding of base metals whose joining surfaces are uneven. It is more desirable that the substrate 2 be 50 to 300 $\mu$m. This is because the substrate 2, if having a thickness within this range, can be more easily manufactured and handled. As described above, the substrate 2 is made by cold rolling. Hence, it has smooth surfaces, and its surface regions are formed of small crystals. Therefore, the atoms of both metal layers 3 can easily diffuse into the substrate 2.

When two base metals are bonded by using any conventional insert of the kind not comprising a substrate, atoms of one base metal, which may adversely affect the crystal structure of the other base metal, can diffuse into the other base metal. This undesirable phenomenon does not occur when the insert of this invention is used since the insert comprises the substrate 2 whose composition and thickness have been adjusted.

The bonding alloy layers 3 are made of a Ni-P alloy, an Ni-B alloy, a Ni-Si alloy, a Ni-Si-B alloy, a Cu-Mn-Ni alloy, a Cu-Zn alloy, a Ag-Ti-Cu alloy or a Cu-Ti alloy. All these alloys have relatively low melting points, ranging from 800 to 1140°C, and can thus easily achieve liquid phase diffusion bonding. In other words, the atoms of these alloys can easily diffuse into the substrate 2 and the base metals 4 and 5. Since the bonding alloy layers 3 are formed on both major surfaces of the substrate 2 by plating, they can be extremely thin. Their thickness is preferably 5 to 20 $\mu$m. If their thickness is less than 5 $\mu$m, the layers 3 fail to fasten the base metals 4 and 5 at the entire joining surfaces thereof since the base metals 4 and 5 have a surface roughness of about 5 $\mu$m. Conversely, if the thickness of layers 3 is too high, it takes a long time for the atoms of the layers 3 to diffuse into the substrate 2 and the base metals 4 and 5, thereby reducing the efficiency of liquid phase diffusion bonding. The liquid phase diffusion bonding can be accomplished in a relatively short time if the bonding alloy layers 3 have a thickness falling within the above range.

It is desirable that a difference between the melting point of the alloy layers 3 and that of the base metals 4 and 5 be at least 200°C. It is also preferable that a difference between the melting point of the substrate 2 and that of the layers 3 be at least 100°C. Otherwise the substrate 2 and the base metals 4 and 5 would be deformed in some cases when they are heated to a temperature higher than the melting point of the layers 3.

When the base metals 4 and 5 are made of the same material (e.g., carbon steel), it would be advisable that both bonding alloy layers 3 be made of this material. In this case, both layers 3 can simultaneously be formed by electroplating on the both major surfaces of the substrate 2. If the base metals 4 and 5 are made of the same material, the insert 1 can serve to firmly join the base metals 4 and 5.

On the other hand, when the base metals 4 and 5 are made of different materials, alloy layers 3 of different materials which can well be bonded to the materials of the base metals 4 and 5, respectively, are formed on the major surfaces of the substrate 2. In this case, too, the layers 3 can serve to strongly bond the base metals 4 and 5. Therefore, the insert of this invention can bond two base metals made of different materials, strongly unlike the conventional inserts for liquid phase diffusion bonding.

Fig. 3 is a cross-sectional view of an insert 10 according to a second embodiment of the invention. Fig. 3 shows two base metals 8 and 9 joined by the insert 10 interposed between them. As is shown in Fig. 3, insert 10 comprises a thin substrate 2 made by cold-rolling, and one bonding alloy layer 3 formed by plating on one surface of the substrate 2. This insert 10 can be used when the base metals 8 and 9 are made of, for example, stainless steel and carbon steel, respectively. The substrate 2 is made of carbon steel.

The layer 3 is formed on the lower surface of the substrate 2, so as to contact the base metal 8. Since the substrate 2 and the base metal 9 are made of the same material, they can be joined by direct diffusion bonding. The base metal 8 and the substrate 2, which are made of different materials, are readily bonded by means of liquid phase diffusion bonding, as the atoms of the alloy layer 3 diffuse into the substrate 2 and the base metal 8. Therefore, the substrate 2 can strongly bond the base metals 8 and 9 together.

In either the first or the second embodiment, each bonding alloy layer 3 can be formed by various plating methods, such as electroplating, hot dipping, non-electrode plating, sputtering, vacuum plating and ion plating.

Several examples of the invention will now be described.

## Example 1

An Ni foil having a thickness of 100 $\mu$m was made by rolling. Two layers of Ni-11wt%P alloy, having a thickness of 20 $\mu$m, were formed on the both surfaces of the Ni foil, respectively, by the known electroplating process. Thus was obtained an insert. This insert was interposed between two plates of Fe-18wt%Cr-18wt%Ni alloy. The two plate-like base metals and the insert were placed within a furnace filled with Ar gas. They were then heated at 1000°C for one hour, while a pressure of 100 bar was being applied on the insert by pressing both plates onto the insert. As a result, a combined structure was obtained. It was observed that the atoms of Ni-11wt% P alloy had diffused into the Ni foil and both base metals, uniformly over the entire joining interface of the foil and the base metals. The combined structure was put to a tensile strength test. It was broken, not at the joining interface of the foil and the base metals, but at a portion of one of the base metals.

## Example 2

An Ni foil having a thickness of 50 $\mu$m was made. Two layers of Ni-4,0wt%B alloy, having a thickness of 5 $\mu$m, were formed on the both surfaces of the Ni foil, respectively, by magnetron sputtering process, thus obtaining an insert. The magnetron sputtering process was performed in an Ar gas atmosphere of $1,3 \cdot 10^{-8}$ bar ($10^{-5}$ Torr), by supplying a DC current of 500 to 1000 V to the Ni foil for 30 minutes. This insert was interposed between two block-like base metals of Inconel 718 (an Ni-Cr-Fe alloy), each being 500 mm wide, 500 mm long, and 100 mm thick. The base metals and the insert were placed within a furnace in which a reduced pressure of $1,3 \cdot 10^{-7}$ bar ($10^{-4}$ Torr) was maintained. They were then heated at 1150°C for 30 minutes, while a pressure of 50 bar was being applied on the insert by pressing both base metals onto the insert. As a result, a combined structure was obtained. It was observed that both base metals were as firmly bonded as the plate-like base metals were in Example 1. The combined structure was put to a tensile strength test. It was broken, not at the joining interface of the foil and the base metals, but at a portion of one of the base metals.

## Example 3

An Inconel 713C foil having a thickness of 100 $\mu$m was made. Two layers of Ni-7,0wt%Si-2.0wt%B alloy, having a thickness of 5 $\mu$m, were

formed on the surfaces of the Inconel 713C foil, respectively, by magnetron sputtering process, thereby obtaining an insert. The magnetron sputtering process was performed under the same conditions as in Example 2. This insert was interposed between two block-like base metals of Inconel 713C, each being 500 mm wide, 500 mm long, and 200 mm thick. The base metals and the insert were placed within a furnace in which a reduced pressure of $1,3 \cdot 10^{-8}$ bar ($10^{-5}$ Torr) was maintained. They were then heated at 1150°C for 6 hours, while a pressure of 50 bar was being applied on the insert by pressing both base metals onto the insert. As a result, a combined structure was obtained. It was observed that the joining interface of both blocks had the same crystal structure of any other portions of the base metals.

## Example 4

A Cu foil having a thickness of 50 $\mu$m was made by rolling. One layer of Cu-35wt%Mn-9,0wt%Ni alloy, having a thickness of 20 $\mu$m, were formed on one surface of the Cu foil by the known hot dipping process, thus obtaining an insert. The insert was interposed between two base metals which were a Cu plate and a carbon steel plate, respectively, with the layer of Cu-35wt%Mn-9,0wt%Ni alloy contacting the carbon steel plate. The base metals and the insert were placed within a furnace in which a reduced pressure of $1,3 \cdot 10^{-8}$ bar ($10^{-5}$ Torr) was maintained. They were then heated at 1000°C for 30 minutes, while a pressure of 50 bar was being applied on the insert by pressing both base metals onto the insert. As a result, a combined structure was obtained. It was observed that the base metals were as firmly bonded together as in Example 1. The combined structure was put to a tensile strength test. It was broken, not at the joining interface of the foil and the base metals, but at a portion of one of the base metals.

## Example 5

A Cu foil having a thickness of 50 $\mu$m was made by rolling. A layer of Cu-32,5wt%Zn alloy and another layer of Ni-11wt%P alloy, both having a thickness of 20 $\mu$m, were formed on two surfaces of the Cu foil, respectively, by the known electroplating process. Thus an insert was obtained. The insert was interposed between two base metals which were a Cu plate and a carbon steel plate, respectively with the Cu-32,5wt%Zn alloy layer contacting the Cu plate, and with the Ni-11wt%P alloy layer contacting the carbon steel plate. The base metals and the insert were placed within a furnace in which a reduced pressure of $1,3 \cdot 10^{-8}$

bar ($10^{-5}$ Torr) was maintained. They were then heated at 1000°C for 30 minutes, while a pressure of 50 bar was being applied on the insert by pressing both base metals onto the insert. As a result, a combined structure was obtained. It was observed that the base metals were as firmly bonded together as in Example 4. The combined structure was put to a tensile strength test. It was broken, not at the joining interface of the foil and base metals, but at a portion of the Cu base metal.

Example 6

A Cu foil having a thickness of 300 $\mu$m was made by rolling. A layer of Ag-2wt%Ti-30wt%Cu alloy, having a thickness of 5 $\mu$m, was formed on one surface of the Cu foil by magnetron sputtering process under the same conditions as in Example 2. Further, another layer of Ni-11wt%P alloy, having a thickness of 10 $\mu$m, was formed on the other surface of the Cu foil, by the known non-electrode plating process. Thus was obtained an insert. The insert was interposed between two base metals which were a Ti plate and a carbon steel plate, respectively with the Ag-2wt%Ti-30wt%Cu alloy layer contacting the Ti plate, and with the Ni-11wt%P alloy layer contacting the carbon steel plate. The base metals and the insert were placed within a furnace in which a reduced pressure of 1,3 • $10^{-8}$ bar ($10^{-5}$ Torr) was maintained. They were then heated at 950°C for 3 hours, while a pressure of 50 bar was being applied on the insert by pressing both base metals onto the insert. As a result, a combined structure was obtained. It was observed that the base metals were as firmly bonded together as in Example 1. The combined structure was put to a tensile strength test. It was broken, not at the joining interface of the foil and the base metals, but at a portion of the Ti base metal.

Example 7

A Ni foil having a thickness of 50 $\mu$m was made by rolling. Two layers of 72wt%Cu-28wt%Ti alloy, having a thickness of 5 $\mu$m, were formed on the two major surfaces of the Ni foil, respectively, by magnetron sputtering process the same conditions as in Example 2, thus obtaining an insert. The insert was interposed between two base metals which are a Ti plate and a carbon steel plate. The base metals and the insert were placed within a furnace in which a reduced pressure of 1,3 • $10^{-8}$ bar ($10^{-5}$ Torr) was maintained. They were then heated at 950°C for 3 hours, while a pressure of 50 bar was being applied on the insert by pressing both base metals onto the insert. As a result, a combined structure was obtained. It was observed that the base metals were as firmly bonded together as in Example 6. The combined structure was put to a tensile strength test. It was broken, not at the joining interface of the foil and the base metals, but at a portion of the Ti base metal.

**Claims**

1. An insert (1) to be interposed between first and second base metals (4, 5), each made of a metal or an alloy, for joining the first and second base metals (4, 5) by liquid phase diffusion bonding, the insert (1) comprising a thin substrate (2) made of a metal or an alloy, and two bonding alloy layers (3) formed by plating on the two major surfaces of the substrate (2), respectively, and having a melting point lower than that of the first and second base metals (4, 5),
characterized
   - in that the thin substrate (2) has a thickness in the range of 50 to 500 $\mu$m and is made of a material selected from the group consisting of Fe, Ni, Cu, Ti, an Fe-based alloy, an Ni-based alloy, a Cu-based alloy and a Ti-based alloy;
   - and in that the two bonding alloy layers (3) have a thickness in the range of 5 to 20 $\mu$m.

2. The insert according to claim 1, wherein the substrate (2) is made by rolling.

3. The insert according to claim 1 or 2, wherein the plating includes electroplating, vacuum plating, hot dipping, non-electrode plating, sputtering and ion plating.

4. The insert according to any of claims 1 to 3, wherein the bonding alloy layers (3) are made of a material selected from the group consisting of an Ni-based alloy, a Cu-based alloy and a Ti-based alloy.

5. The insert according to any of claims 1 to 4, wherein the substrate (2) has a melting point higher than that of the bonding alloy layers (3) by 100 °C or more.

6. The insert according to any of claims 1 to 5, wherein the bonding alloy layers (3) have a melting point lower than that of the first and second base metals (4, 5) by 200 °C or more.

7. An insert (10) to be interposed between first and second base metals (9, 8), each made of a metal or an alloy, for joining the first and second base metals (9, 8) by liquid phase diffusion bonding, the insert (10) comprising a thin substrate (2) made of a metal or an alloy, and a bonding alloy layer (3) formed by plating on a major surface of the substrate (2), and having a melting point lower than that of the first and second base metals (9, 8), characterized

- in that the thin substrate (2) has a thickness in the range of 50 to 500 $\mu$m and is made of the same material as the first base metal (9) or a material containing an element which is the main component of the first base metal (9), the material being selected from the group consisting of Fe, Ni, Cu, Ti, an Fe-based alloy, an Ni-based alloy, a Cu-based alloy and a Ti-based alloy;
- and in that the bonding alloy layer (3) has a thickness in the range of 5 to 20 $\mu$m.

8. The insert according to claim 7, wherein the substrate (2) is made by rolling.

9. The insert according to claim 7 or 8, wherein the plating includes electroplating, vacuum plating, hot dipping, non-electrode plating, sputtering and ion plating.

10. The insert according to any of claims 7 to 9, wherein the bonding alloy layer (3) is made of a material selected from the group consisting of an Ni-based alloy, a Cu-based alloy and a Ti-based alloy.

11. The insert according to any of claims 7 to 10, wherein the substrate (2) has a melting point higher than that of the bonding alloy layer (3) by 100 °C or more.

12. The insert according to any of claims 7 to 11, wherein the bonding alloy layer (3) has a melting point lower than that of the first and second base metals (9, 8) by 200 °C or more.

13. A method of liquid phase diffusion bonding of two base metals (4, 5) using an insert (1), the method comprising the following steps:
- forming bonding alloy layers (3) having a melting point lower than that of the two base metals (4, 5) on both major surfaces of a thin substrate (2) made of a material selected from the group consisting of Fe, Ni, Cu, Ti, an Fe-based alloy, an Ni-based alloy, a Cu-based alloy, and a Ti-based alloy, by plating the bonding alloy layers (3) on the substrate (2) to produce the insert (1);
- inserting the insert (1) between the base metals (4, 5); and
- heating the two base metals (4, 5) and the insert (1) to a temperature not lower than the melting point of the bonding alloy layers (3) and lower than the melting points of the two base metals (4, 5) and the substrate (2) to diffuse the atoms of the substrate (2) and the two base metals (4, 5), thereby joining the two base metals (4, 5),
wherein a substrate (2) is used having a thickness in the range of 50 to 500 $\mu$m and being sufficiently thick in its material to remain after heating as a layer joining the two base metals (4, 5), and
wherein bonding alloy layers (3) are used having a thickness in the range of 5 to 20 $\mu$m.

14. A method of liquid phase diffusion bonding of first and second base metals (9, 8) using an insert (10), the method comprising the following steps:
- forming a bonding alloy layer (3) of a material having a melting point lower than that of a substrate (2) and the second base metal (8) by plating the material of the bonding alloy layer (3) on a major surface of a thin substrate (2) made of the same material as the first base metal (9) or a material containing an element which is the main component of the first base metal (9), the material of the substrate (2) being selected from the group consisting of Fe, Ni, Cu, Ti, an Fe-based alloy, an Ni-based alloy, a Cu-based alloy, and a Ti-based alloy, the substrate (2) and the bonding alloy layer (3) constituting the insert (10), the material of the bonding alloy layer (3) being selected to contain atoms diffusible by heat into the substrate (2) and into the second base metal (8);
- inserting the insert (10) between the first and second base metals (9, 8) so that the bonding alloy layer (3) faces toward the second base metal (8); and
- heating the base metals (9, 8) and the insert (10) to a temperature not lower than the melting point of the bonding alloy layer (3) and lower than the melting point of the base metals (9, 8) and the substrate (2) to diffuse atoms of the bonding alloy layer (3) into the substrate (2) and into the second base metal (8), and to diffuse the atoms of the substrate (2) into the first base metal (9), thereby joining the first and second base metals (9, 8),
wherein a substrate (2) is used having a thickness in the range of 50 to 500 $\mu$m and
wherein a bonding alloy layer (3) is used having a thickness in the range of 5 to 20 $\mu$m.

**Patentansprüche**

1. Einsatz (1) zum Einfügen zwischen ein erstes und ein zweites Grundmetall (4, 5), die jeweils aus einem Metall oder einer Legierung bestehen, um das erste und das zweite Grundmetall (4, 5) durch Flüssigphase-Diffusionsverbinden zu verbinden, wobei der Einsatz (1) ein dünnes Substrat (2), das aus einem Metall oder einer Legierung besteht, und zwei Verbindungs-Legierungsschichten (3) aufweist, die jeweils durch Metallisieren auf den beiden Hauptflächen des Substrats (2) gebildet sind und einen Schmelzpunkt haben, der niedriger als der des ersten und des zweiten Grundmetalls (4, 5) ist, dadurch gekennzeichnet,

- daß das dünne Substrat (2) eine Dicke im Bereich von 50 bis 500 $\mu$m hat und aus einem Material besteht, das aus der Gruppe ausgewählt ist, die aus Fe, Ni, Cu, Ti, einer Legierung auf Fe-Basis, einer Legierung auf Ni-Basis, einer Legierung auf Cu-Basis und einer Legierung auf Ti-Basis besteht;
- und daß die beiden Verbindungs-Legierungsschichten (3) eine Dicke im Bereich von 5 bis 20 $\mu$m haben.

2. Einsatz nach Anspruch 1,
wobei das Substrat (2) durch Walzen hergestellt ist.

3. Einsatz nach Anspruch 1 oder 2,
wobei das Metallisieren Galvanisieren, Vakuummetallisieren, Schmelztauchen, elektrodenloses Plattieren, Sputtern und Ionenplattieren umfaßt.

4. Einsatz nach einem der Ansprüche 1 bis 3,
wobei die Verbindungs-Legierungsschichten (3) aus einem Material bestehen, das aus der Gruppe ausgewählt ist, die aus einer Legierung auf Ni-Basis, einer Legierung auf Cu-Basis und einer Legierung auf Ti-Basis besteht.

5. Einsatz nach einem der Ansprüche 1 bis 4,
wobei das Substrat (2) einen Schmelzpunkt hat, der um 100 °C oder mehr höher als der der Verbindungs-Legierungsschichten (3) ist.

6. Einsatz nach einem der Ansprüche 1 bis 5,
wobei die Verbindungs-Legierungsschichten (3) einen Schmelzpunkt haben, der um 200 °C oder mehr niedriger als der des ersten und des zweiten Grundmetalls (4, 5) ist.

7. Einsatz (10) zum Einfügen zwischen ein erstes und ein zweites Grundmetall (9, 8), die jeweils aus einem Metall oder einer Legierung bestehen, um das erste und das zweite Grundmetall (9, 8) durch Flüssigphase-Diffusionsverbinden zu verbinden, wobei der Einsatz (10) ein dünnes Substrat (2), das aus einem Metall oder einer Legierung besteht, und eine Verbindungs-Legierungsschicht (3) aufweist, die durch Metallisieren auf einer Hauptfläche des Substrats (2) gebildet ist und einen Schmelzpunkt hat, der niedriger als der des ersten und des zweiten Grundmetalls (9, 8) ist, dadurch gekennzeichnet,

- daß das dünne Substrat (2) eine Dicke im Bereich von 50 bis 500 $\mu$m hat und aus dem gleichen Material wie das erste Grundmetall (9) oder einem Material besteht, das ein Element enthält, das der Hauptbestandteil des ersten Grundmetalls (9) ist, wobei das Material aus der Gruppe ausgewählt ist, die aus Fe, Ni, Cu, Ti, einer Legierung auf Fe-Basis, einer Legierung auf Ni-Basis, einer Legierung auf Cu-Basis und einer Legierung auf Ti-Basis besteht;
- und daß die Verbindungs-Legierungsschicht (3) eine Dicke im Bereich von 5 bis 20 $\mu$m hat.

8. Einsatz nach Anspruch 7,
wobei das Substrat (2) durch Walzen hergestellt ist.

9. Einsatz nach Anspruch 7 oder 8,
wobei das Metallisieren Galvanisieren, Vakuummetallisieren, Schmelztauchen, elektrodenloses Plattieren, Sputtern und Ionenplattieren umfaßt.

10. Einsatz nach einem der Ansprüche 7 bis 9,
wobei die Verbindungs-Legierungsschicht (3) aus einem Material besteht, das aus der Gruppe ausgewählt ist, die aus einer Legierung auf Ni-Basis, einer Legierung auf Cu-Basis und einer Legierung auf Ti-Basis besteht.

11. Einsatz nach einem der Ansprüche 7 bis 10,
wobei das Substrat (2) einen Schmelzpunkt hat, der um 100 °C oder mehr höher als der der Verbindungs-Legierungsschicht (3) ist.

12. Einsatz nach einem der Ansprüche 7 bis 11, wobei die Verbindungs-Legierungsschicht (3) einen Schmelzpunkt hat, der um 200 °C oder mehr niedriger als der des ersten und des zweiten Grundmetalls (9, 8) ist.

13. Verfahren zum Flüssigphase-Diffusionsverbinden von zwei Grundmetallen (4, 5) unter Verwendung eines Einsatzes (1), wobei das Verfahren die folgenden Schritte aufweist:

- Bilden von Verbindungs-Legierungsschichten (3), deren Schmelzpunkt niedriger als der der beiden Grundmetalle (4, 5) ist, auf beiden Hauptflächen eines dünnen Substrats (2), das aus einem Material besteht, das aus der Gruppe ausgewählt ist, die aus Fe, Ni, Cu, Ti, einer Legierung auf Fe-Basis, einer Legierung auf Ni-Basis, einer Legierung auf Cu-Basis und einer Legierung auf Ti-Basis besteht, durch Metallisieren der Verbindungs-Legierungsschichten (3) auf das Substrat (2), um den Einsatz (1) herzustellen;
- Einsetzen des Einsatzes (1) zwischen die Grundmetalle (4, 5); und
- Erwärmen der beiden Grundmetalle (4, 5) und des Einsatzes (1) auf eine Temperatur, die nicht niedriger als der Schmelzpunkt der Verbindungs-Legierungsschichten (3) und niedriger als die Schmelzpunkte der beiden Grundmetalle (4, 5) und des Substrats (2) ist, um die Atome des Substrats (2) und der beiden Grundmetalle (4, 5) zu diffundieren, wodurch die beiden Grundmetalle (4, 5) verbunden werden,

wobei ein Substrat (2) verwendet wird, das eine Dicke im Bereich von 50 bis 500 μm hat und dessen Material ausreichend dick ist, um nach dem Erwärmen als eine Schicht zu verbleiben, die die beiden Grundmetalle (4, 5) verbindet, und wobei Verbindungs-Legierungsschichten (3) verwendet werden, die eine Dicke im Bereich von 5 bis 20 μm haben.

14. Verfahren zum Flüssigphase-Diffusionsverbinden eines ersten und eines zweiten Grundmetalls (9, 8) unter Verwendung eines Einsatzes (10), wobei das Verfahren die folgenden Schritte aufweist:

- Bilden einer Verbindungs-Legierungsschicht (3) aus einem Material, dessen Schmelzpunkt niedriger als der eines Substrats (2) und des zweiten Grundmetalls (8) ist, durch Metallisieren des Materials der Verbindungs-Legierungsschicht (3) auf eine Hauptfläche eines dünnen Substrats (2), das aus dem gleichen Material wie das erste Grundmetall (9) oder einem Material besteht, das ein Element enthält, das der Hauptbestandteil des ersten Grundmetalls (9) ist, wobei das Material des Substrats (2) aus der Gruppe ausgewählt ist, die aus Fe, Ni, Cu, Ti, einer Legierung auf Fe-Basis, einer Legierung auf Ni-Basis, einer Legierung auf Cu-Basis und einer Legierung auf Ti-Basis besteht, wobei das Substrat (2) und die Verbindungs-Legierungsschicht (3) den Einsatz (10) bilden, wobei das Material der Verbindungs-Legierungsschicht (3) ausgewählt ist, um Atome zu enthalten, die durch Wärme in das Substrat (2) und in das zweite Grundmetall (8) diffundierbar sind;
- Einsetzen des Einsatzes (10) zwischen das erste und das zweite Grundmetall (9, 8), so daß die Verbindungs-Legierungsschicht (3) dem zweiten Grundmetall (8) zugewandt ist; und
- Erwärmen der Grundmetalle (9, 8) und des Einsatzes (10) auf eine Temperatur, die nicht niedriger als der Schmelzpunkt der Verbindungs-Legierungsschicht (3) und niedriger als der Schmelzpunkt der Grundmetalle (9, 8) und des Substrats (2) ist, um Atome der Verbindungs-Legierungsschicht (3) in das Substrat (2) und in das zweite Grundmetall (8) zu diffundieren und um die Atome des Substrats (2) in das erste Grundmetall (9) zu diffundieren, wodurch das erste und das zweite Grundmetall (9, 8) verbunden werden,

wobei ein Substrat (2) verwendet wird, das eine Dicke im Bereich von 50 bis 500 μm hat, und wobei eine Verbindungs-Legierungsschicht (3) verwendet wird, die eine Dicke im Bereich von 5 bis 20 μm hat.

## Revendications

1. Pièce intercalaire (1) destinée à être interposée entre des premier et second métaux de base (4, 5), chacun étant réalisé en un métal ou en un alliage, pour joindre les premier et second métaux de base (4, 5) au moyen d'un soudage par diffusion en phase liquide, la pièce intercalaire (1) comprenant un substrat mince (2) réalisé en un métal ou en un alliage et deux couches d'alliage de soudage (3) qui sont formées respectivement par placage sur les deux surfaces principales du substrat (2) et qui présentent un point de fusion inférieur à celui des premier et second métaux de base (4, 5),

caractérisée en ce que :

le substrat mince (2) présente une épaisseur qui s'inscrit dans une plage qui va de 50 à 500 $\mu$m et il est réalisé en un matériau choisi dans le groupe constitué par le Fe, le Ni, le Cu, le Ti, un alliage à base de Fe, un alliage à base de Ni, un alliage à base de Cu et un alliage à base dé Ti ; et

les deux couches d'alliage de soudage (3) présentent une épaisseur qui s'inscrit dans une plage de 5 à 20 $\mu$m.

2. Pièce intercalaire selon la revendication 1, dans laquelle le substrat (2) est réalisé par laminage.

3. Pièce intercalaire selon la revendication 1 ou 2, dans laquelle le placage inclut l'électroplacage, le placage sous vide, l'immersion à chaud, le placage sans électrode, la pulvérisation et le placage ionique.

4. Pièce intercalaire selon l'une quelconque des revendications 1 à 3, dans laquelle les couches d'alliage de soudage (3) sont réalisées en un matériau choisi dans le groupe constitué par un alliage à base de Ni, un alliage à base de Cu et un alliage à base de Ti.

5. Pièce intercalaire selon l'une quelconque des revendications 1 à 4, dans laquelle le substrat (2) présente un point de fusion supérieur à celui des couches d'alliage de soudage (3) de 100° C ou plus.

6. Pièce intercalaire selon l'une quelconque des revendications 1 à 5, dans laquelle les couches d'alliage de soudage (3) présentent un point de fusion inférieur à celui des premier et second métaux de base (4, 5) de 200° C ou plus.

7. Pièce intercalaire (10) destinée à être interposée entre des premier et second métaux de base (9, 8), chacun étant réalisé en un métal ou en un alliage, pour joindre les premier et second métaux de base (9, 8) au moyen d'un soudage par diffusion en phase liquide, la pièce intercalaire (10) comprenant un substrat mince (2) réalisé en un métal ou en un alliage et une couche d'alliage de soudage (3) qui est formée par placage sur une surface principale du substrat (2) et qui présente un point de fusion inférieur à celui des premier et second métaux de base (9, 8) ;

caractérisée en ce que :

le substrat mince (2) présente une épaisseur qui s'inscrit dans une plage qui va de 50 à 500 $\mu$m et il est réalisé à partir du même matériau que le premier métal de base (9) ou en un matériau qui contient un élément qui est le composant principal du premier métal de base (9), le matériau étant choisi dans le groupe constitué par le Fe, le Ni, le Cu, le Ti, un alliage à base de Fe, un alliage à base de Ni, un alliage à base de Cu et un alliage à base de Ti ; et

la couche d'alliage de soudage (3) présente une épaisseur qui s'inscrit dans une plage de 5 à 20 $\mu$m.

8. Pièce intercalaire selon la revendication 7, dans laquelle le substrat (2) est réalisé par laminage.

9. Pièce intercalaire selon la revendication 7 ou 8, dans laquelle le placage inclut l'électroplacage, le placage sous vide, l'immersion à chaud, le placage sans électrode, la pulvérisation et le placage ionique.

10. Pièce intercalaire selon l'une quelconque des revendications 7 à 9, dans laquelle les couches d'alliage de soudage (3) sont réalisées en un matériau choisi dans le groupe constitué par un alliage à base de Ni, un alliage à base de Cu et un alliage à base de Ti.

11. Pièce intercalaire selon l'une quelconque des revendications 7 à 10, dans laquelle le substrat (2) présente un point de fusion supérieur à celui de la couche d'alliage de soudage (3) de 100° C ou plus.

12. Pièce intercalaire selon l'une quelconque des revendications 7 à 11, dans laquelle la couche d'alliage de soudage (3) présente un point de fusion inférieur à celui des premier et second métaux de base (9, 8) de 200° C ou plus.

13. Procédé de soudage par diffusion en phase liquide de deux métaux de base (4, 5) qui utilisent une pièce intercalaire (1), le procédé comprenant les étapes suivantes :

formation de couches d'alliage de soudage (3) présentant un point de fusion inférieur à celui des deux métaux de base (4, 5) sur les deux surfaces principales d'un substrat mince (2) réalisé en un matériau choisi dans le groupe constitué par le Fe, le Ni, le Cu, le Ti, un alliage à base de Fe, un alliage à base de Ni, un alliage à base de Cu et un alliage à base de Ti, par placage des couches d'alliage de soudage (3) sur le substrat (2) afin de produire la pièce intercalaire (1) ;

insertion de la pièce intercalaire (1) entre les métaux de base (4, 5) ; et

chauffage des deux métaux de base (4, 5) et de la pièce intercalaire (1) jusqu'à une température non inférieure au point de fusion des couches d'alliage de soudage (3) et inférieure aux points de fusion des deux métaux de base (4, 5) et du substrat (2) afin de diffuser les atomes du substrat (2) et des deux métaux de base (4, 5), d'où la jonction des deux métaux de base (4, 5), dans lequel un substrat (2) qui présente une épaisseur qui s'inscrit dans une plage qui va de 50 à 500 $\mu$m est utilisé, ce substrat présentant une épaisseur de matériau qui suffit pour qu'il subsiste après chauffage en tant que couche qui joint les deux métaux de base (4, 5) ; et

dans lequel des couches d'alliage de soudage (3) présentant une épaisseur qui s'inscrit dans une plage de 5 à 20 $\mu$m sont utilisées.

14. Procédé de soudage par diffusion en phase liquide de premier et second métaux de base (9, 8) qui utilisent une pièce intercalaire (10), le procédé comprenant les étapes suivantes :

formation d'une couche d'alliage de soudage (3) en un matériau qui présente un point de fusion inférieur à celui d'un substrat (2) et du second métal de base (8) par placage du matériau de la couche d'alliage de soudage (3) sur une surface principale d'un substrat mince (2) réalisé à partir du même matériau que le premier métal de base (9) ou en un matériau qui contient un élément qui est le composant principal du premier métal de base (9), le matériau du substrat (2) étant choisi dans le groupe constitué par le Fe, le Ni, le Cu, le Ti, un alliage à base de Fe, un alliage à base de Ni, un alliage à base de Cu et un alliage à base de Ti, le substrat (2) et la couche d'alliage de soudage (3) constituant la pièce intercalaire (10), le matériau de la couche d'alliage de soudage (3) étant choisi de manière à contenir des atomes qui peuvent se diffuser thermiquement dans le substrat (2) et dans le second métal de base (8) ;

insertion de la pièce intercalaire (10) entre les premier et second métaux de base (9, 8) de telle sorte que la couche d'alliage de soudage (3) soit tournée vers le second métal de base (8) ; et

chauffage des métaux de base (9, 8) et de la pièce intercalaire (10) jusqu'à une température non inférieure au point de fusion de la couche d'alliage de soudage (3) et inférieure aux points de fusion des métaux de base (9, 8) et du substrat (2) afin de diffuser des atomes de la couche d'alliage de soudage (3) dans le substrat (2) et dans le second métal de base (8) et afin de diffuser les atomes du substrat (2) dans le premier métal de base (9), d'où la jonction des premier et second métaux de base (9, 8), dans lequel un substrat (2) qui présente une épaisseur qui s'inscrit dans une plage qui va de 50 à 500 $\mu$m est utilisé ; et

dans lequel une couche d'alliage de soudage (3) qui présente une épaisseur qui s'inscrit dans une plage qui va de 5 à 20 $\mu$m est utilisée.

F I G. 1

F I G. 2

# F I G. 3

# F I G. 4